(19) Europäisches Patentamt
European Patent Office
Office européen des brevets

(11) **EP 1 034 032 B1**

(12) **FASCICULE DE BREVET EUROPEEN**

(45) Date de publication et mention de la délivrance du brevet:
**03.01.2007 Bulletin 2007/01**

(21) Numéro de dépôt: **98954542.1**

(22) Date de dépôt: **09.11.1998**

(51) Int Cl.:
***B01J 19/32*** *(2006.01)*

(86) Numéro de dépôt international:
**PCT/FR1998/002389**

(87) Numéro de publication internationale:
**WO 1999/025472 (27.05.1999 Gazette 1999/21)**

(54) **COLONNE DE DISTILLATION AVEC GARNISSAGE ONDULE-CROISE**

DESTILLATIONSKOLONNE MIT GEWELLTER BANDPACKUNG

DISTILLING COLUMNS WIT CROSS-CORRUGATED LINING

(84) Etats contractants désignés:
**DE DK FR GB NL PT**

(30) Priorité: **17.11.1997 FR 9714381**

(43) Date de publication de la demande:
**13.09.2000 Bulletin 2000/37**

(73) Titulaire: **L'air Liquide, S.A. à Directoire et Conseil de Surveillance pour l'Etude et l'Exploitation des Procédés Georges Claude 75321 Paris Cedex 07 (FR)**

(72) Inventeurs:
• **LEHMAN, Jean-Yves F-94700 Maisons-Alfort (FR)**
• **WERLEN, Etienne F-78000 Versailles (FR)**

(74) Mandataire: **Mercey, Fiona Susan et al L'Air Liquide SA, DSPI - Service Brevets & Marques, 75 Quai d'Orsay 75321 Paris Cedex 07 (FR)**

(56) Documents cités:
**EP-A- 0 273 191        WO-A-84/04048
DE-B- 1 195 779        US-A- 3 526 393
US-A- 5 632 934        US-A- 5 644 932**

**Description**

La présente invention est relative aux colonnes comprenant une superposition de tronçons de garnissage ondulé-croisé. Elle s'applique notamment aux colonnes de distillation d'air embarquées sur des plates-formes pétrolières flottantes ou sur des barges.

Comme il est bien connu, les garnissages ondulés-croisés sont utilisés dans certaines colonnes de distillation à la place des plateaux de distillation pour assurer l'échange de matière et de chaleur entre un gaz montant et un liquide descendant. Ces garnissages ondulés-croisés sont constitués par une superposition de tronçons. Chaque tronçon est formé d'un empilement de bandes ondulées disposées chacune dans un plan général vertical et les unes contre les autres. Les ondulations sont obliques et descendent dans des sens opposés d'une bande à la suivante.

Les bandes comportent généralement une perforation dense de petit diamètre, avec un taux de perforation d'environ 10%, pour permettre au liquide de transiter de part et d'autre des bandes ondulées. ,

Le GB-A-1 004 046 et le CA-A-1 095 827 décrivent de tels garnissages ondulés-croisés.

Un garnissage ondulé-croisé est généralement fabriqué à partir d'un produit plat, à savoir de feuilles métalliques sous forme de bandes. Les bandes sont d'abord pliées (ou cintrées) de façon à former une tôle ondulée en bande dont les ondulations sont obliques par rapport à l'axe de la bande. Les bandes pliées sont ensuite découpées en tronçons, puis empilées en retournant alternativement une bande sur deux. Les tronçons de garnissage ainsi obtenus sont souvent appelés "packs".

Le WO-A-90/10 497 décrit, entre autres, un garnissage analogue aux garnissages ondulés-croisés précités, mais perforé de manière différente. Le terme "garnissage ondulé-croisé" utilisé ici comprend également un tel garnissage, ainsi que tout garnissage analogue.

Le US-A-3,526,393 et le US-A-5,632,934 décrivent une bande ondulée pour un garnissage ondulé-croisé comportant sur son bord inférieur, en vue de face, un motif de saillie vers le bas dont le contour est tel que la tangente au contour forme un angle aigu avec la direction horizontale.

Les plates-formes pétrolières en mer produisent des gaz résiduaires. Pour des raisons économiques et environnementales, il devient de plus en plus nécessaire de récupérer ces gaz. Une méthode consiste en leur conversion en hydrocarbures plus lourds, sous forme liquide et donc plus facilement transportables, par le procédé Fischer-Tropsch, lequel consomme de grandes quantités d'oxygène.

Le problème de base que l'invention se propose de résoudre consiste à réaliser une colonne de distillation d'air capable de fonctionner dans des conditions satisfaisantes à bord d'une plate-forme ou d'une barge, c'est-à-dire en présence d'oscillations dues à la houle et dont l'amplitude est typiquement comprise entre 5° et 10° dans toutes les directions. Un impératif est ainsi que le liquide distribué en tête de colonne assure un mouillage sensiblement uniforme du garnissage sur toute la section de la colonne malgré les oscillations précitées.

A cet effet, l'invention a pour objet une colonne selon la revendication 1.

La colonne ondulée suivant l'invention peut comporter un tronçon comprenant un empilement de bandes ondulées, dont une au moins comprend une ou plusieurs des caractéristiques suivantes :

- le motif se répète une pluralité de fois le long du bord inférieur de la bande, les motifs étant adjacents les uns aux autres ou séparés par les segments sensiblement rectilignes;
- chaque motif est obtenu par pliage d'une bande plane suivant une ondulation de hauteur H, d'angle d'ouverture $\gamma$ et de rayon $\underline{r}$ en sommet d'onde, avec les génératrices des ondes inclinées d'un angle $\delta$ en vue de face, les paramètres H, $\gamma$, $\underline{r}$ et $\delta$ étant choisis tels que

$$\frac{\sin\delta.\tan\mu.\sin\left(\dfrac{\gamma}{2}\right)+\cos\delta}{\sqrt{1+\tan^2\mu.\sin^2\left(\dfrac{\gamma}{2}\right)}} < \cos\ \alpha_0,$$

avec

$$\tan \mu = \tan \delta \cdot \frac{\left[ r.\sin\left(\frac{\gamma}{2}\right) + \frac{H}{2} - r \right] + \frac{\pi}{180} \cdot \left(90 - \frac{\gamma}{2}\right).\cos\left(\frac{\gamma}{2}\right) r}{\sin\left(\frac{\gamma}{2}\right).\left[ r.\sin\left(\frac{\gamma}{2}\right) + \frac{H}{2} - r \right] + \cos^2\left(\frac{\gamma}{2}\right).r}$$

- chaque motif est obtenu par découpage de deux encoches dans le bord inférieur de la bande avant le pliage de celle-ci.

En particulier, dans un mode de réalisation, la superposition de tronçons est constituée de tronçons à bandes parallèles à la direction d'oscillation préférentielle et de tronçons à bandes perpendiculaires à cette direction, le nombre de ces derniers étant compris entre 2/3 et 3/4 du nombre total de tronçons de ladite superposition de tronçons.

Des exemples de réalisation de l'invention vont maintenant être décrits en regard des dessins annexés, sur lesquels :

- la Figure 1 représente schématiquement, partiellement en coupe axiale, une colonne de distillation suivant l'invention;
- la Figure 2 représente en perspective une partie d'un tronçon de garnissage ondulé-croisé;
- la Figure 3 schématise en perspective une colonne de distillation inclinée;
- la Figure 4 schématise l'agencement de la colonne de la Figure 1;
- la Figure 5 schématise de manière analogue une variante;
- la Figure 6 représente la forme de l'ondulation des bandes du garnissage ondulé-croisé de la Figure 2;
- la Figure 7 représente une bande ondulée du garnissage, en vue de face;
- la Figure 8 représente à échelle agrandie le bord inférieur d'une bande du garnissage; et
- les Figures 9 et 10 représentent schématiquement deux variantes.

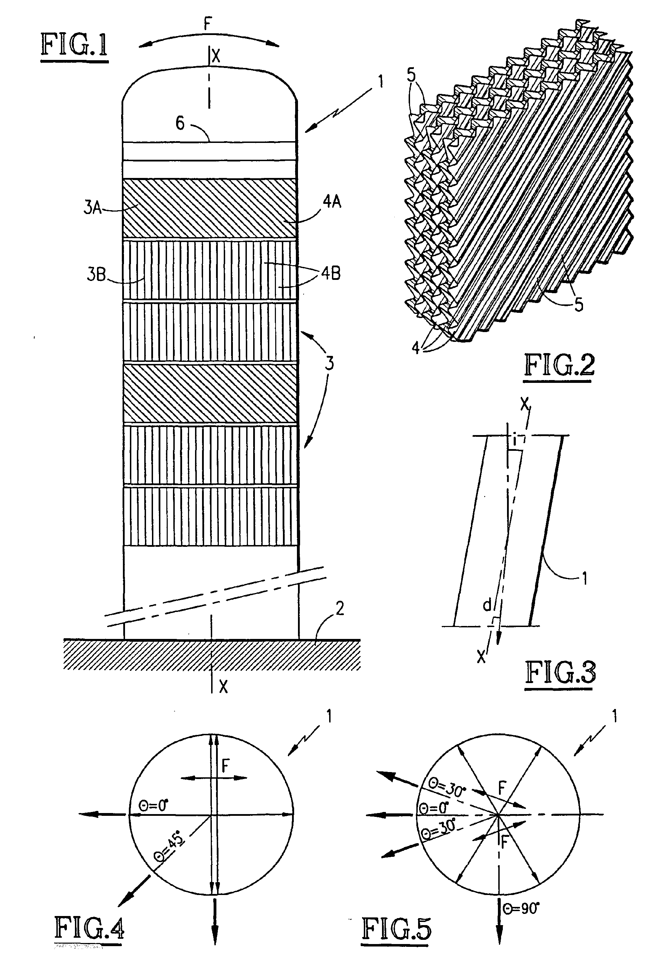

La Figure 1 représente schématiquement une colonne de distillation d'air 1 fixée à une barge 2 ancrée au fond de la mer. Cette barge, sous l'effet de la houle, oscille avec une direction d'oscillation préférentielle, illustrée par la double flèche F et contenue dans le plan de la Figure. L'angle d'inclinaison sur la verticale de l'axe X-X de la colonne peut atteindre une valeur maximale prédéterminée $\alpha_0$ au moins égale à 5°, et typiquement comprise entre 5 et 10°. Dans cette plage d'oscillation, la colonne doit assurer une distillation satisfaisante.

La Figure 1 illustre schématiquement l'agencement intérieur de la partie supérieure de la colonne 1. Cette partie supérieure comporte une superposition de packs 3 de garnissage ondulé-croisé, dont chacun a la forme d'une galette cylindrique occupant toute la section de la colonne.

Chaque pack 3 (Figure 2) est constitué d'un empilement de bandes ondulées 4 à ondes 5 obliques, ces bandes étant éventuellement perforées sur toute leur surface. Chaque bande 4 comporte un plan général vertical, toutes les bandes ont la même hauteur, et les ondes sont alternativement inclinées dans un sens et dans l'autre d'une bande à la suivante. Ainsi, les ondes des bandes adjacentes se touchent en un grand nombre de points d'intersection.

Il est prévu deux types de packs 3 : des packs 3A dont les bandes 4A sont orientées parallèlement à la direction préférentielle d'oscillation F, c'est-à-dire au plan de la Figure 1, et des packs 3B dont les bandes 4B sont orientées perpendiculairement aux bandes 4A.

Tous les packs 3 ont le même nombre de bandes 4, mais les packs 3B sont en plus grand nombre que les packs 3A. Dans cet exemple, les packs 3B sont deux fois plus nombreux que les packs 3A : le pack supérieur est un pack 3A, puis, en descendant, on trouve deux packs 3B, un pack 3A, deux packs 3B, etc... Bien entendu, cet agencement peut se répéter tout le long de la colonne de distillation, c'est-à-dire de la colonne basse pression et de la colonne moyenne pression lorsqu'il s'agit, comme dans cet exemple, d'une double colonne de distillation d'air.

Par suite, le liquide qui descend dans la colonne, distribué en tête de colonne sur toute la section de celle-ci par un distributeur 6, s'écoule majoritairement sur des bandes perpendiculaires à la direction F, lesquelles s'opposent efficacement à la déviation du liquide dans le sens de l'inclinaison. Les packs 3A s'opposent moins à cette déviation, mais leur présence est nécessaire pour assurer une redistribution du liquide perpendiculairement aux bandes 3A à plusieurs niveaux de la colonne.

De façon générale, le nombre de packs 3B peut être compris entre 2/3 et 3/4 environ du nombre total de packs.

On peut caractériser l'aptitude du garnissage à résister à la déviation du liquide sous l'effet de l'oscillation, par une grandeur appelée "facteur de déviation de liquide", égal à d/i, où d désigne l'angle de déviation moyen du liquide par rapport à l'axe X-X de la colonne tandis que i désigne l'angle d'inclinaison de cet axe sur la verticale (Figure 3).

On peut montrer que ce facteur de déviation est proportionnel à la moyenne M des cosinus des angles que font l'ensemble des bandes 4A et 4B avec la direction F, ces cosinus étant pris en valeur absolue. Le facteur de proportionnalité ne dépend que du type de garnissage utilisé.

Avec l'agencement classique à packs 3A et 3B alternés, la moyenne M est 0, 5 lorsque la direction F correspond à l'une des deux orientations des bandes, et est supérieure à 0,5 pour toute autre direction F. Par exemple, M = 0,71 pour une inclinaison dont le plan fait un angle $\theta$ = 45° avec ceux des bandes ondulées.

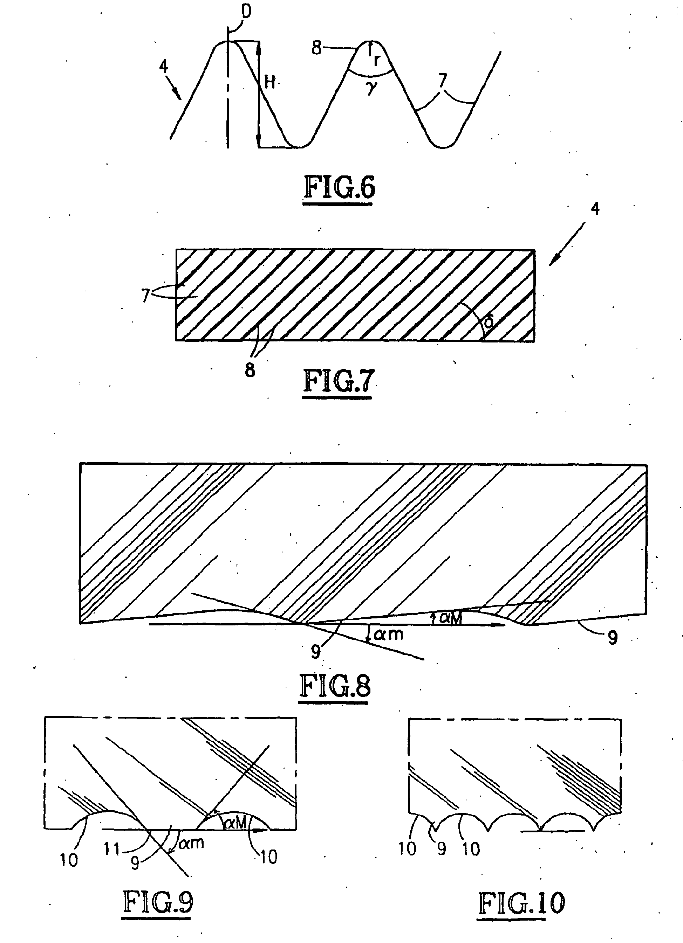

Sur les Figures 4 et 5, $\theta$ désigne l'angle du plan d'oscillation avec un plan de référence, dont la trace est supposée horizontale.

La Figure 4 correspond à l'agencement deux packs 3B-un pack 3A décrit plus haut. $\theta$ = 0 est la direction des bandes 4A. Dans ce cas, pour $\theta$ = 0, on a M = 0,33; pour $\theta$ = 45°, on a M = 0,71; et pour $\theta$ = 90°, on a M - 0,67. Ainsi, le facteur de déviation est réduit lorsqu'on choisit la direction préférentielle d'oscillation F, telle que $\theta$ = 0, ou une direction voisine.

En variante, d'autres agencements peuvent conduire à une déviation du liquide réduite. Ainsi, dans l'exemple de la Figure 5, les packs font alternativement un angle x = + 60° et x = - 60° avec la direction de référence $\theta$ = 0. Dans ce cas, $\theta$ = 0 donne M = 0,5, $\theta$ = 30° donne M = 0,43 et $\theta$ = 90° donne M = 0,87. On voit que le facteur de déviation est réduit lorsqu'on choisit la direction préférentielle d'oscillation F telle que $\theta$ = 30°, ou une direction voisine. Il y a ici, bien entendu, deux directions F symétriques qui conviennent.

On décrira maintenant, en regard des Figures 6 à 10, la constitution du bord inférieur des bandes 4A et 4B.

En vue en bout (Figure 6), chaque onde a une forme générale triangulaire, avec des flancs rectilignes 7 symétriques par rapport à la direction verticale D et des arrondis 8 aux sommets d'ondes. L'onde est définie par sa hauteur totale H, mesurée parallèlement à la direction D, par son angle $\gamma$ d'ouverture aux sommets, et par le rayon r des arrondis 8.

En vue de face (Figure 7), chaque bande 4 est un rectangle dont les ondes 8 sont inclinées d'un angle $\delta$ par rapport à l'horizontale.

Lorsque la tôle plane de départ est pliée suivant l'angle $\delta$, par enroulement sur un mandrin oblique approprié, ses bords supérieur et inférieur prennent une forme en dents de scie, comme représenté sur la Figure 8 pour le bord inférieur. Il y a ainsi, en vue de face, sur le bord inférieur, une série de protubérances 9 en saillie vers le bas. Par rapport à la direction horizontale orientée vers la droite, la tangente au contour des protubérances évolue entre un minimum négatif $\alpha_m$ et un maximum positif $\alpha_M$.

Lorsque le liquide qui ruisselle sur la bande ondulée atteint son bord inférieur, chaque protubérance 9 constitue un point bas qui favorise le gouttage du liquide sur le pack inférieur et l'empêche de se déplacer jusqu'à l'extrémité de la bande. Pour que ce phénomène se produise quelle que soit l'inclinaison de l'axe de la colonne, dans n'importe quelle direction, jusqu'à l'angle $\alpha_0$ précité ($\alpha_0 \geq 5°$), on choisit les paramètres H, r, $\gamma$ et $\delta$ de façon que :

$$- \alpha_m > \alpha_0 \ \text{et} \ \alpha_M > \alpha_0.$$

Ceci peut s'obtenir par la condition suivante :

$$\frac{\sin\delta.\tan\mu.\sin\left(\frac{\gamma}{2}\right)+\cos\delta}{\sqrt{1+\tan^2\mu.\sin^2\left(\frac{\gamma}{2}\right)}} < \cos\alpha_0 ,$$

avec

4

$$\tan \mu = \tan \delta . \frac{\left[r.\sin\left(\frac{\gamma}{2}\right) + \frac{H}{2} - r\right] + \frac{\pi}{180} . \left(90 - \frac{\gamma}{2}\right).r}{\sin\left(\frac{\gamma}{2}\right).\left[r.\sin\left(\frac{\gamma}{2}\right) + \frac{H}{2} - r\right] + \cos^2\left(\frac{\gamma}{2}\right).r}$$

Comme représenté sur les Figures 9 et 10, l'existence de points bas le long du bord inférieur des bandes 4, pour la colonne embarquée, peut également être obtenue en réalisant sur ce bord inférieur, avant pliage de la tôle, une série d'encoches 10 ayant tout profil approprié: arc de cercle ou d'ellipse comme représenté, mais également polygones, etc... Ces encoches 10, qui délimitent entre elles les protubérances 9, peuvent être séparées les unes des autres par des tronçons rectilignes (Figure 9), ou adjacentes les unes aux autres (Figure 10).

Dans le cas de la Figure 9, on a $-\alpha_m = \alpha_M = 45$. Ces valeurs changent quelque peu après pliage de la tôle, mais restent très supérieures aux valeurs $\alpha_0$ prescrites pour l'application considérée, lesquelles sont comprises entre 5 et 10° comme indiqué plus haut.

## Revendications

1.   - Colonne de distillation (1) dont l'axe (X-X) peut s'incliner jusqu'à un angle prédéterminé $\alpha_0$ au moins égal à 5° comprenant une superposition de tronçons de garnissage ondulé-croisé (3A, 3B) ayant au moins deux orientations angulaires différentes, l'un au moins des tronçons comprenant un empilement de bandes ondulées verticales (4) dont l'une au moins comporte sur son bord inférieur, en vue de face, au moins un motif (9) en saillie vers le bas dont le contour est tel que, si $\alpha_m$ et $\alpha_M$ désignent les extrema de la valeur algébrique de l'angle aigu que la tangente au contour forme avec la direction horizontale, on a

$$-\quad \alpha_m > \alpha_0 \quad et \quad \alpha_M > \alpha_0,$$

avec leurs ondulations (8) inclinées alternativement en sens opposés, et en ce qu'il existe au moins une direction (F) telle que la moyenne des cosinus des angles que font l'ensemble des bandes (4A, 4B) des tronçons avec cette direction (F), les cosinus étant pris en valeur absolue, est inférieure à 0,5, **caractérisée en ce qu'**elle est embarquée sur une structure flottante (2) ayant une direction d'oscillation préférentielle, et **en ce que** ladite direction (F) est cette direction d'oscillation préférentielle.

2.   - Colonne suivant la revendication 1 **caractérisée en ce que** le motif (9) se répète une pluralité de fois le long du bord inférieur de la bande (4), les motifs étant adjacents les uns aux autres ou séparés par les segments sensiblement rectilignes (11).

3.   - Colonne suivant la revendication 1 ou 2, **caractérisée en ce que** chaque motif (9) est obtenu par pliage d'une bande plane suivant une ondulation de hauteur H, d'angle d'ouverture $\gamma$ et de rayon $\underline{r}$ en sommet d'onde, avec les génératrices des ondes inclinées d'un angle $\delta$ en vue de face, les paramètres H, $\gamma$, $\underline{r}$ et $\delta$ étant choisis tels que

$$\frac{\sin\delta . \tan\mu . \sin\left(\frac{\gamma}{2}\right) + \cos\delta}{\sqrt{1 + \tan^2\mu . \sin^2\left(\frac{\gamma}{2}\right)}} < \cos \alpha_0,$$

avec

$$\tan \mu = \tan \delta . \frac{\left[r.\sin\left(\frac{\gamma}{2}\right) + \frac{H}{2} - r\right] + \frac{\pi}{180}.\left(90 - \frac{\gamma}{2}\right).\cos\left(\frac{\gamma}{2}\right)r}{\sin\left(\frac{\gamma}{2}\right).\left[r.\sin\left(\frac{\gamma}{2}\right) + \frac{H}{2} - r\right] + \cos^2\left(\frac{\gamma}{2}\right).r}$$

**4.** - Colonne suivant la revendication 1 ou 2, **caractérisée en ce que** chaque motif (9) est obtenu par découpage de deux encoches (10) dans le bord inférieur de la bande avant le pliage de celle-ci.

**5.** - Colonne de distillation suivant la revendication 1, **caractérisée en ce que** la superposition de tronçons est constituée de tronçons (3A) à bandes (4A) parallèles à la direction d'oscillation préférentielle et de tronçons (3B) à bandes (4B) perpendiculaires à cette direction, le nombre de ces derniers étant compris entre 2/3 et 3/4 du nombre total de tronçons de ladite superposition de tronçons.

## Claims

**1.** Distillation column (1), the axis (X-X) of which may be inclined by up to a predetermined angle $\alpha_0$ at least equal to 5°, comprising superposed sections of cross-corrugated packing (3A, 3B) with at least two different angular orientations, at least one of the sections comprising a stack of vertical corrugated strips (4), at least one of which comprises, on its lower edge, when viewed face-on, at least one downwardly-projecting pattern (9), the contour of which is such that, if $\alpha_m$ and $\alpha_M$ denote the extrema of the algebraic value of the acute angle that the tangent to the contour makes with the horizontal direction, then

$$-\alpha_m > \alpha_0 \text{ and } \alpha_M > \alpha_0,$$

with their corrugations (8) inclined alternately in opposite directions, and in that there is at least one direction (F) that is such that the mean of the cosines of the angles that all of the strips (4A, 4B) of the sections make with this direction (F), the cosines being considered in terms of absolute values, is below 0.5, **characterized in that** it is on board a floating structure (2) which has a preferred direction of oscillation, and **in that** the said direction (F) is this preferred direction of oscillation.

**2.** Column according to Claim 1, **characterized in that** the pattern (9) repeats itself a number of times along the lower edge of the strip (4), the patterns being adjacent to one another or separated by essentially straight portions (11).

**3.** Column according to Claim 1 or 2, **characterized in that** each pattern (9) is obtained by folding a flat strip into a corrugation of height H, of angle $\gamma$ and of radius $\underline{r}$ at the crest of the corrugation, with the generatrices of the corrugations inclined by an angle $\delta$, when viewed face-on, the parameters H, $\gamma$, $\underline{r}$ and $\delta$ being chosen such that

$$\frac{\sin\delta.\tan\mu.\sin\left(\frac{\gamma}{2}\right) + \cos\delta}{\sqrt{1 + \tan^2\mu.\sin^2\left(\frac{\gamma}{2}\right)}} < \cos \alpha_0,$$

with

$$\tan \mu = \tan \delta . \frac{\left[r.\sin\left(\frac{\gamma}{2}\right) + \frac{H}{2} - r\right] + \frac{\pi}{180}.\left(90 - \frac{\gamma}{2}\right).\cos\left(\frac{\gamma}{2}\right)r}{\sin\left(\frac{\gamma}{2}\right).\left[r.\sin\left(\frac{\gamma}{2}\right) + \frac{H}{2} - r\right] + \cos^2\left(\frac{\gamma}{2}\right).r}$$

4. Column according to Claim 1 or 2, **characterized in that** each pattern (9) is obtained by cutting two notches (10) in the lower edge of the strip before folding it.

5. Distillation column according to Claim 1, **characterized in that** the superposed sections consist of sections (3A) with strips (4A) parallel to the preferred direction of oscillation and of sections (3B) with strips (4B) perpendicular to this direction, the number of the latter being between 2/3 and 3/4 of the total number of the said superposed sections.

## Patentansprüche

1. Destillationskolonne (1), deren Achse (X-X) sich bis zu einem vorbestimmten Winkel $\alpha_0$ von mindestens gleich 5° neigen kann, umfassend eine quer gewellte Übereinanderlagerung von Auskleidungs-Teilabschnitten (3A, 3B) mit mindestens zwei verschiedenen Winkelorientierungen, wobei mindestens einer der Teilabschnitte eine Anhäufung von senkrechten gewellten Bändern (4) beinhaltet, wobei mindestens ein Band an seinem Innenrand, von vorne gesehen, mindestens ein Motiv (9) aufweist, das nach unten hervorsteht, dessen Umriss derartig ist, dass sich, wenn $\alpha_m$ und $\alpha_M$, die Extremwerte des algebraischen Wertes des spitzen Winkels bezeichnen, den die Tangente am Umriss mit der Horizontalrichtung bildet, ergibt

$$- \alpha_m > \alpha_0 \quad \text{und} \quad \alpha_M > \alpha_0$$

mit ihren Welligkeiten (8), die abwechselnd in gegenüberliegenden Richtungen geneigt sind, und **dadurch gekennzeichnet, dass** mindestens eine Richtung (F) derart existiert, dass der Kosinusmittelwert der Winkel, den alle Bänder (4A, 4B) der Teilabschnitte mit dieser Richtung (F) bilden, wobei die Kosinuswerte als Absolutwert genommen werden, unterhalb 0,5 liegt, **dadurch gekennzeichnet, dass** sie auf einer losen Struktur (2) mitgeführt wird, die eine bevorzugte Pendelbewegung aufweist, und dass die Richtung (F) diese bevorzugte Pendelbewegung ist.

2. Kolonne nach Anspruch 1, **dadurch gekennzeichnet, dass** sich das Motiv (9) mehrere Male am unteren Rand des Bandes (4) entlang wiederholt, wobei die Motive miteinander benachbart oder durch im Wesentlichen geradlinige Segmente (11) getrennt sind.

3. Kolonne nach Anspruch 1 oder 2, **dadurch gekennzeichnet, dass** jedes Motiv (9) durch Falten eines flachen Bandes gemäss einer Welligkeit mit Höhe H, mit einem Öffnungswinkel $\gamma$ und einem Radius $\underline{r}$ am Wellenberg erhalten wird, mit den um einen Winkel $\delta$, von vorne gesehen, geneigten Mantellinien, wobei die Parameter H, $\gamma$, $\underline{r}$ und $\delta$ derart gewählt werden, dass

$$\frac{\sin\delta.\tan\mu.\sin\left(\frac{\gamma}{2}\right) + \cos\delta}{\sqrt{1 + \tan^2\mu.\sin^2\left(\frac{\gamma}{2}\right)}} < \cos \alpha_0 ,$$

wobei

$$\tan \mu = \tan \delta \cdot \frac{\left[r.\sin\left(\frac{\gamma}{2}\right)+\frac{H}{2}-r\right]+\frac{\pi}{180}.\left(90-\frac{\gamma}{2}\right).\cos\left(\frac{\gamma}{2}\right)r}{\sin\left(\frac{\gamma}{2}\right)\left[r.\sin\left(\frac{\gamma}{2}\right)+\frac{H}{2}-r\right]+\cos^2\left(\frac{\gamma}{2}\right).r}$$

4. Kolonne nach Anspruch 1 oder 2, **dadurch gekennzeichnet, dass** jedes Motiv (9) durch Zuschneiden von zwei Kerben (10) in den unteren Rand des Bandes vor dessen Faltung erhalten wird.

5. Destillationskolonne nach Anspruch 1, **dadurch gekennzeichnet, dass** die Übereinanderlagerung von Teilabschnitten aus Teilabschnitten (3A) gebildet wird, die parallel zur vorzugsweisen Pendelrichtung sind, und aus Teilabschnitten (3B) mit Bändern (4B), die senkrecht zu dieser Richtung sind, wobei die Anzahl dieser Bänder aus 2/3 und 3/4 der Gesamtanzahl der Teilabschnitte der Übereinanderlagerung aus Teilabschnitten gebildet wird.

FIG.1

FIG.2

FIG.3

FIG.4

FIG.5

FIG.6

FIG.7

FIG.8

FIG.9

FIG.10